# EUROPÄISCHE PATENTSCHRIFT

(11) **EP 2 519 759 B1**
(45) Veröffentlichungstag und Bekanntmachung des Hinweises auf die Patenterteilung: **07.01.2015**
(21) Anmeldenummer: 10778947.1
(22) Anmeldetag: 03.11.2010
(51) Int. Cl.: F16H 37/04, F16H 57/033

(54) **VERSTELLANTRIEB MIT INTEGRIERTEN ZUSATZFUNKTIONEN**
ADJUSTMENT DRIVE HAVING INTEGRATED ADDITIONAL FUNCTIONS
ENTRAÎNEMENT DE RÉGLAGE POSSÉDANT DES FONCTIONS SUPPLÉMENTAIRES INTÉGRÉES

(30) Priorität: 30.12.2009 DE 102009055412
(43) Veröffentlichungstag der Anmeldung: 07.11.2012
(73) Patentinhaber: Robert Bosch GmbH, 70442 Stuttgart (DE)
(72) Erfinder: OBERLE, Hans-Juergen, 76437 Rastatt (DE); BRAUN, Roland, 77815 Buehl (DE); BRAUN, Wilhelm, 77815 Buehl (DE)
(86) Internationale Anmeldenummer: PCT/EP2010/066676
(87) Internationale Veröffentlichungsnummer: WO 2011/079981

(56) Entgegenhaltungen:
- EP-A2- 1 123 826
- AU-A1- 2008 264 221
- DE-A1- 3 733 922
- DE-A1- 10 251 499
- GB-A- 2 185 085
- US-A- 4 041 807
- US-A- 5 570 606

## Beschreibung

### Stand der Technik

Die vorliegende Erfindung betrifft einen Verstellantrieb, insbesondere eines Fahrzeugs, zum Antrieb einer Komponente vorgesehen ist, mit einer Antriebseinheit, die eine erste Abtriebswelle umfasst.

In Fahrzeugen, insbesondere in Kraftfahrzeugen, wird die Bedienung von Fahrzeugkomponenten und der Komfort für den Fahrgast immer mehr dadurch vereinfacht, dass die Fahrzeugkomponenten automatisiert werden. Dafür werden Verstellantriebe benötigt, die auch in unzugänglichen Bereichen des Fahrzeugs für Verstellaufgaben, Verriegel- und Entriegelaufgaben und Positionieraufgaben verwendbar sind. Aufgrund des geringen zur Verfügung stehenden Bauraums sollen diese Verstellantriebe möglichst klein sein.

Um den Anforderungen der Kunden in der Fahrzeugindustrie, insbesondere in der Kraftfahrzeugindustrie, gerecht zu werden, werden die Komponenten der Fahrzeuge modellspezifisch und teilweise auch innerhalb derselben Modellreihe kundenspezifisch angepasst. Dabei ist es wichtig, die Anzahl der Bauteile innerhalb der Fahrzeugproduktion möglichst klein zu halten, damit die Lagerhaltung möglichst wenig aufwendig ist und die Stückzahlen der Bauteile nicht zu groß ist. Dadurch sind die Komponenten kostengünstig herstellbar.

Zum Verstellen von Komponenten, beispielsweise einer Heckklappe, eines Schiebedachs oder insbesondere zur Höhenverstellung oder Neigungsverstellung eines Sitzes, werden häufig Verstellantriebe benötigt, die eine hohe Untersetzung aufweisen und ein hohes Drehmoment übertragen. In der Regel werden hierfür Planetengetriebe verwendet, wobei oftmals mehrere Getriebestufen nacheinander angeordnet werden. Nachteilig an dieser Anordnung sind jedoch die nicht unerheblichen Abrollgeräusche.

Für eine gegebenenfalls benötigte Sensorik, insbesondere eine Positioniererkennung, wird in den Verstellantrieben herkömmlich ein Volumen bereitgestellt, in das die Sensorik bei Bedarf, insbesondere als Einschubplatine, integrierbar ist. Dadurch ist das Volumen des Verstellantriebs bei nicht benötigter Sensorik unnötig groß. Andererseits ist der im Fahrzeug zur Verfügung stehende Bauraum sehr begrenzt.

Mit der AU 2008 264 221 A1 ist ein modulares Getriebe zum Öffnen einer Tür oder eines Tores bekannt geworden, bei der mehrere Getriebestufen modular hineinander geschaltet werden können. Dabei treibt ein Elektromotor ein erstes Schneckengetriebe an, wobei an dessen Abtrieb weitere Getriebe mit separaten Getriebegehäusen angefügt werden können.

### Offenbarung der Erfindung

Aufgabe der Erfindung ist es, einen Verstellantrieb zum Antrieb einer Komponente zu schaffen, der ein hohes Drehmoment überträgt, der sehr kompakt aufgebaut ist, der in unzugänglichen Bereichen einsetzbar ist, der vielfältig, insbesondere für verschiedene Fahrzeugmodelle oder für verschiedene Anforderungen desselben Fahrzeugs oder Fahrzeugmodells, und insbesondere für Positionieraufgaben, einsetzbar ist, der geräuscharm ist und der kostengünstig herstellbar sowie leicht montierbar ist.

Die Aufgabe wird gelöst mit einem Verstellantrieb, insbesondere eines Fahrzeugs, der zum Antrieb einer Komponente vorgesehen ist, mit einer Antriebseinheit, die eine erste Abtriebswelle umfasst, an die eine Abtriebseinheit oder eine Zwischeneinheit, die zwischen der Antriebseinheit und der Abtriebseinheit angeordnet ist, modular adaptierbar ist.

Der erfindungsgemäße Verstellantrieb ist daher in den drei Ausführungsformen entweder ohne Abtriebs- und Zwischeneinheit, oder mit adaptierter Abtriebseinheit, oder mit adaptierter Abtriebs- und Zwischeneinheit einsetzbar. Daher ist der Verstellantrieb je nach Anforderung für verschiedene Verstellaufgaben, insbesondere in demselben Fahrzeug oder derselben Fahrzeugmodellreihe oder verschiedenen Fahrzeugen, verwendbar.

Außerdem ist die Zwischeneinheit modular zwischen die Antriebseinheit und die Abtriebseinheit adaptierbar. Dadurch können die Antriebseinheit, die Zwischeneinheit sowie die Abtriebseinheit modular gefertigt werden. Ihre jeweiligen Stückzahlen sind dadurch an die Anforderungen anpassbar. Dadurch ist die Lagerhaltung kostengünstig. Erfindungsgemäß umfasst die Antriebseinheit ein erstes Schneckengetriebe sowie ein zweites Schneckengetriebe. Dabei sind das erste Schneckengetriebe sowie das zweite Schneckengetriebe als ein Doppelschneckengetriebe hintereinander geschaltet. Die Kombination zweier Schneckengetriebe ermöglicht eine sehr hohe Drehzahlverringerung auf sehr kleinem Bauraum. Erfindungsgemäß umfasst die Antriebseinheit ein Stirnradgetriebe. Das Stirnradgetriebe umfasst ebenfalls bevorzugt die erste Abtriebswelle. Dabei umfasst das Stirnradgetriebe weiterhin bevorzugt ein Stirnrad, welches an der ersten Abtriebswelle angeordnet ist. Weiterhin umfasst das Stirnradgetriebe vorzugsweise ein Zahnrad, welches an einer insbesondere achsparallel zur ersten Antriebswelle angeordneten Zwischenwelle angeordnet ist, und welches mit dem Stirnrad in Eingriff ist. Erfindungsgemäß umfasst die Abtriebseinheit ein Planetengetriebe. Bevorzugt weist das Planetengetriebe ein Sonnenrad auf, welches an die erste Abtriebswelle adaptierbar ist. Diese Anordnung ermöglicht eine hohe Untersetzung sowie die koaxiale Anordnung der ersten Abtriebswelle und der zweiten Abtriebswelle.

Bevorzugt weist die Zwischeneinheit zumindest eine Zusatzfunktion auf, insbesondere einen Sensor, eine Rutschkupplung, einen Überlastschutz, eine Übersetzung, oder weitere. Ebenfalls bevorzugt weist die Zwischeneinheit mehrere Zusatzfunktionen auf. Durch Adaption der Zwischeneinheit an die Antriebseinheit und zwischen die Antriebs- und die Abtriebseinheit ist eine Vielzahl verschiedener Aufgaben und Funktionen in den Verstellantrieb integrierbar. Dabei ist der von dem Verstellantrieb benötigte Bauraum immer optimal, da er sich nur bei Adaption Antriebseinheit oder der Zwischeneinheit sowie der Abtriebseinheit jeweils um das von diesen Einheiten benötigte Volumen vergrößert.

Besonders bevorzugt weist die Zwischeneinheit zumindest einen Sensor für eine Positioniererkennung auf. Als Sensor für die Positionserkennung sind dabei herkömmliche Sensoren, beispielsweise Inkrementalgeber, Absolutwertgeber, Resolver oder weitere verwendbar. Dabei ist die Anordnung der Zwischeneinheit vor die Abtriebseinheit besonders vorteilhaft, da die Übersetzung der Abtriebseinheit so wählbar ist, dass sie eine ausreichende Auflösung hinsichtlich der Positionierungssignale bieten kann. Außerdem ist die Güte der Signale nur
vom Getriebespiel der Abtriebseinheit beeinträchtigt, wobei das Getriebespiel der Antriebseinheit keinen Einfluss auf die Positioniererkennung hat.

Es ist bevorzugt, dass eine die Antriebseinheit antreibende Antriebswelle, die erste Abtriebswelle der Antriebseinheit sowie eine zweite Abtriebswelle der Abtriebseinheit koaxial angeordnet sind. Dabei ist die zweite Abtriebswelle bevorzugt zum Antrieb der Komponente vorgesehen.

Weiterhin ist die Zwischeneinheit an die erste Abtriebswelle adaptierbar, wobei das Sonnenrad des Planetengetriebes der Abtriebseinheit an die Zwischeneinheit adaptierbar ist. Dadurch kann die Zwischeneinheit zwischen der Antriebseinheit und der Abtriebseinheit angeordnet werden.

Die Antriebseinheit ist mittels eines Antriebs antreibbar. Als Antrieb wird ein Elektromotor verwendet. Jedoch ist auch ein anderer zur Durchführung mechanischer Arbeit vorgesehener Antrieb verwendbar.

Vorzugsweise ist die Antriebseinheit in einem ersten Gehäuseteil angeordnet, wobei die Zwischeneinheit in einem zweiten Gehäuseteil und die Abtriebseinheit in einem dritten Gehäuseteil angeordnet sind. In den Gehäuseteilen sind die zur jeweiligen Einheit zugeordneten Getriebeteile gelagert und werden durch die Gehäuseteile gegen das Eindringen von Schmutz und Feuchtigkeit geschützt.

Der Abtrieb ist bevorzugt an dem ersten Gehäuseteil gelagert.

Der erfindungsgemäße Verstellantrieb ist sehr vielfältig verwendbar, da er sehr flexibel an benötigte Anforderungen anpassbar ist, da er immer optimal kompakt aufgebaut ist, und da in ihn wahlweise Sensorik und/oder weitere Zusatzfunktionen integrierbar sind.

Im Folgenden wird die Erfindung anhand von Figuren beschrieben. Die Figuren sind lediglich beispielhaft und schränken den allgemeinen Erfindungsgedanken nicht ein.

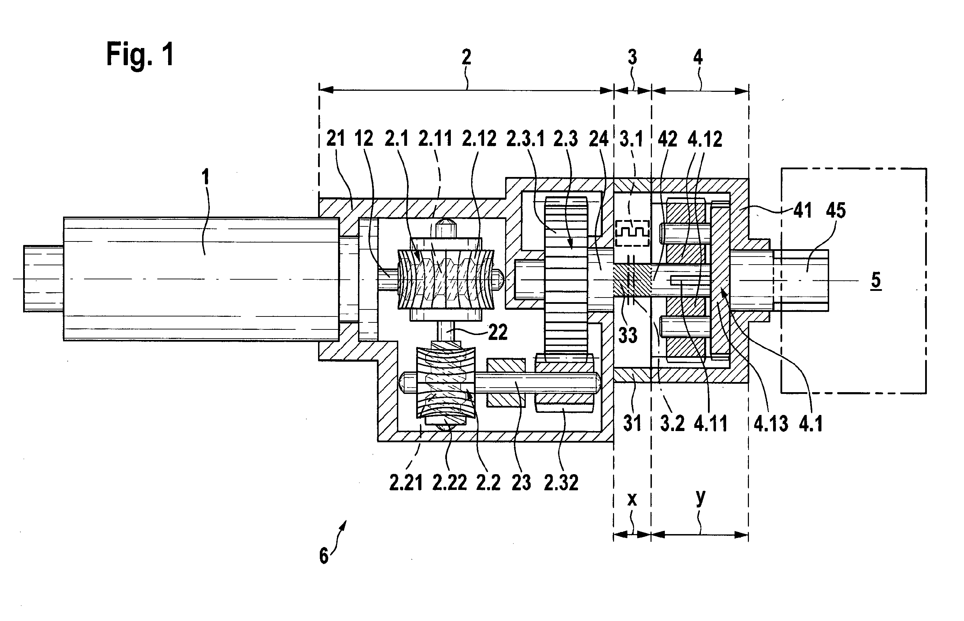

- **Fig. 1**: zeigt schematisch einen erfindungsgemäßen Verstellabtrieb.

Fig. 1 zeigt schematisch einen erfindungsgemäßen Verstellabtrieb 6. Der Verstellantrieb 6 umfasst eine Antriebseinheit 2, die eine Antriebswelle 12 aufweist, welche mittels eines Elektromotors 1 antreibbar ist.

An der Antriebswelle 12 ist eine erste Schnecke 2.11 eines ersten Schneckengetriebes 2.1 angeordnet, welches mit einem ersten Schneckengetrieberad 2.12 des ersten Schneckengetriebes 2.1 zusammenwirkt. Das erste Schneckengetrieberad 2.12 ist an einer Schneckenwelle 22 angeordnet, die im Wesentlichen quer zur Antriebswelle 12 angeordnet ist.

An der Schneckenwelle 22 ist eine zweite Schnecke 2.21 eines zweiten Schneckengetriebes 2.2 angeordnet, welches mit einem zweiten Schneckengetrieberad 2.22 des zweiten Schneckengetriebes 2.2 zusammenwirkt, das an einer Zwischenwelle 23 angeordnet ist. Die Zwischenwelle 23 ist im Wesentlichen quer zur Schneckenwelle 22, und somit im Wesentlichen achsparallel der Antriebswelle 12 angeordnet.

Das erste Schneckengetriebe 2.1 und das zweite Schneckengetriebe 2.2 sind daher zu einem Doppelschneckengetriebe hintereinander geschaltet.

Bei Antrieb der Antriebswelle 12 wird über das erste Schneckengetriebe 2.1 die Schneckenwelle 22 angetrieben, die ihrerseits über das zweite Schneckengetriebe 2.2 die Zwischenwelle 23 antreibt.

An der Zwischenwelle 23 ist ein Zahnrad 2.32 angeordnet, welches mit einem Stirnrad 2.31 zusammenwirkt, und gemeinsam mit diesem ein Stirnradgetriebe 2.3 bildet. Das Stirnrad 2.31 ist an einer ersten Abtriebswelle 24 der Antriebseinheit 2 angeordnet. Diese Anordnung ermöglicht, dass die erste Abtriebswelle 24 im Wesentlichen koaxial zur Antriebswelle 12 angeordnet ist. Bei Antrieb der Zwischenwelle 23 wird das Zahnrad 2.32 angetrieben, das zumindest teilweise in Eingriff mit dem Stirnrad 2.31 des Stirnradgetriebes 2.3 ist, so dass das Stirnrad 2.31 angetrieben wird. Dadurch wird die erste Abtriebswelle 24 angetrieben.

In der hier dargestellten Ausführungsform des Verstellantriebs 6 ist an die erste Abtriebswelle 24 eine Zwischeneinheit 3 adaptiert. Die Zwischeneinheit 3 umfasst einen Sensor 3.1, sowie eine weitere Zusatzfunktion 3.2.

Der Fachmann versteht, dass die Zwischeneinheit 3 eine Verbindungswelle 33 aufweist, die mit ihrer der Antriebseinheit 2 zugewandten Seite an die erste Abtriebswelle 24 der Antriebseinheit 2 adaptierbar ist, wobei an ihrer der Antriebseinheit 2 abgewandten Seite die Abtriebseinheit 4 adaptierbar ist. Die Verbindungswelle 33 ist hier durch eine Schraffur dargestellt. Sie ist im adaptierten Zustand von der ersten Abtriebswelle 24 der Antriebseinheit 2 antreibbar. Der Fachmann versteht, dass sie je nach Anforderung der Zwischeneinheit 3 einerseits einstückig ausgeführt sein kann. Sie kann jedoch auch Zusatzfunktionen 3.2 umfassen, wie beispielsweise eine Rutschkupplung oder ein Getriebe, die eine mehrstückige Fertigung erfordern. Dann sind die Bestandteile der Verbindungswelle 33 im Wesentlichen koaxial angeordnet.

Durch das Adaptieren der Zwischeneinheit 3 und der Abtriebseinheit 4 wird das Volumen des Verstellantriebs 6 um das Volumen der Zwischeneinheit 3 sowie das Volumen der Abtriebseinheit 4 vergrößert. Bevorzugt gehen die Ausmaße der Abtriebseinheit 4 sowie die Ausmaße der Zwischeneinheit 3 im Querschnitt nicht über die Ausmaße der Antriebseinheit 2 hinaus, so dass sich vor allem die Länge des Verstellantriebs 6 um die Länge y der Abtriebseinheit 4 zuzüglich der Länge x der Zwischeneinheit 3 verlängert.

Die Abtriebseinheit 4 des Verstellantriebs 6 weist ein Planetengetriebe 4.1 auf. Das Planetengetriebe 4.1 umfasst ein Sonnenrad 4.11, das an die Zwischenwelle 33 der Zwischeneinheit 3 adaptierbar, und im adaptierten Zustand von dieser antreibbar ist. Das Planetengetriebe 4.1 umfasst Planetenräder 4.12, die mittels eines Planetenradträgers 4.13 miteinander verbunden sind. Am Planetenradträger 4.13 ist eine zweite Abtriebswelle 45 angeordnet. Die zweite Abtriebswelle 45 ist koaxial zum Sonnenrad 4.11 und zur ersten Abtriebswelle 24 angeordnet.

Bei Antrieb des Sonnenrades 4.11 werden die Planetenräder 4.12 angetrieben, so dass sich der Planetenradträger 4.13 dreht. Dadurch dreht sich die am Planetenträger 4.13 angeordnete zweite Abtriebswelle 45.

Das Sonnenrad 4.11 des Planetengetriebes 4.1 der Abtriebseinheit 4 ist auch direkt an die erste Abtriebswelle 24 adaptierbar, wenn die in der Zwischeneinheit 3 integrierten Funktionen nicht benötigt werden. Dann vergrößert sich das Volumen des Verstellantriebs 6 lediglich um das Volumen der Abtriebseinheit 4. Da die Ausmaße der Abtriebseinheit 4 bevorzugt im Querschnitt nicht über die Ausmaße der Antriebseinheit 2 hinaus gehen, verlängert sich in diesem Fall die Länge des Verstellantriebs 6 lediglich um die Länge y der Abtriebseinheit 4.

Außerdem ist der Verstellantrieb 6 auch ohne die Zwischeneinheit 3 und die Abtriebseinheit 4 zum Antrieb einer Komponente 5 verwendbar, wenn auch die von der Zwischeneinheit 3 sowie der Abtriebseinheit 4 bereitgestellten Anforderungen nicht benötigt werden. Daher ist sowohl die erste Abtriebswelle 24 als auch die zweite Abtriebswelle 45 zum Antrieb der Komponente 5 verwendbar.

Als Komponente 5 ist bevorzugt eine Heckklappe vorgesehen. Der Verstellantrieb 6 eignet sich aber auch für das Verstellen von Sitzen, Schiebedächern oder ähnlichen Verstelleinheiten.

Die Antriebseinheit 2 weist ein erstes Gehäuseteil 21, die Zwischeneinheit 3 ein zweites Gehäuseteil 31 und die Abtriebseinheit 4 ein drittes Gehäuseteil 41 auf, in dem ihre Getriebebauteile 2.1 - 2.3, 3.1, 4.1 jeweils gelagert sind. Der Elektromotor 1 ist außerdem am ersten Gehäuseteil 21 gelagert. Die Gehäuseteile 21, 31, 41 fügen sich beim Adaptieren bevorzugt unmittelbar aneinander, so dass sie die Getriebebauteile 2.1 - 2.3, 3.1, 4.1 vor Schmutz und Flüssigkeiten schützen.

## Patentansprüche

1. Verstellantrieb (6) eines Fahrzeugs, der zum Antrieb einer Komponente (5) vorgesehen ist, mit
- einer Antriebseinheit (2), die eine Antriebswelle (12) aufweist, welche mittels eines Elektromotors (1) antreibbar ist, und die ein erstes Schneckengetriebe umfasst, sowie eine erste Abtriebswelle (24), und mit
- einer Abtriebseinheit (4) mit einer zweiten Abtriebswelle (45) zum Antrieb der Komponente, wobei
- die Antriebseinheit ein zweites Schneckengetriebe (2.2) umfasst, sowie ein Stirnradgetriebe (2.3) zum Antrieb der ersten Abtriebswelle (24), wobei das erste und das zweite Schneckengetriebe (2.1, 2.2) zu einem Doppelschneckengetriebe hintereinander geschaltet sind, und
- an die erste Abtriebswelle (24) entweder eine Abtriebseinheit (4) oder eine Zwischeneinheit (3), die zwischen der Antriebseinheit (2) und der Abtriebseinheit (4) angeordnet ist, modular adaptiert ist, und
- die Abtriebseinheit (4) ein Planetengetriebe (4.1) umfasst.

2. Verstellantrieb (6) nach Anspruch 1, **dadurch gekennzeichnet, dass** die Zwischeneinheit (3) zumindest einen Sensor (3.1) für eine Positioniererkennung aufweist.

3. Verstellantrieb (6) nach Anspruch 2, **dadurch gekennzeichnet, dass** die Zwischeneinheit (3) zudem eine Zusatzfunktion (3.1, 3.2) aufweist.

4. Verstellantrieb (6) nach Anspruch 3, **dadurch gekennzeichnet, dass** die Zusatzfunktion (3.1, 3.2) eine Rutschkupplung, ein Überlastschutz, eine Übersetzung und/oder eine Untersetzung ist.

5. Verstellantrieb (6) nach einem der vorherigen Ansprüche, **dadurch gekennzeichnet, dass** die Komponente (5) eine Heckklappe ist.

6. Verstellantrieb (6) nach einem der vorherigen Ansprüche, **dadurch gekennzeichnet, dass** eine die Antriebseinheit (2) antreibende Antriebswelle (12), die erste Abtriebswelle (24) der Antriebseinheit (2), sowie eine zweite Abtriebswelle (45) der Abtriebseinheit (4), die zum Antrieb der Komponente (5) vorgesehen ist, koaxial angeordnet sind.

7. Verstellantrieb (6) nach einem der vorherigen Ansprüche, **dadurch gekennzeichnet, dass** das Stirnradgetriebe (2.3) ein Stirnrad (2.31) umfasst, welches an der ersten Abtriebswelle (24) angeordnet ist.

8. Verstellantrieb (6) nach einem der vorherigen Ansprüche, **dadurch gekennzeichnet, dass** das Planetengetriebe (4.1) ein Sonnenrad (4.11) umfasst, welches an die erste Abtriebswelle (24) der Antriebseinheit (2) adaptierbar ist.

9. Verstellantrieb (6) nach einem der vorherigen Ansprüche, **dadurch gekennzeichnet, dass** die Zwischeneinheit (3) an die erste Abtriebswelle (24) der Antriebseinheit (2) adaptierbar ist, und dass das Sonnenrad (4.11) an die Zwischeneinheit (3) adaptierbar ist.

## Claims

1. Adjustment drive (6) for a vehicle, which adjustment drive is provided for driving a component (5), having
- an input unit (2), which has an input shaft (12), which can be driven by means of an electric motor (1) and comprises a first worm gear, and a first output shaft (24), and having
- an output unit (4) with a second output shaft (45) for driving the component, wherein
- the input unit comprises a second worm gear (2.2) and a spur gear (2.3) for driving the first output shaft (24), wherein the first and the second worm gear (2.1, 2.2) are connected in series so as to form a double worm gear, and
- either an output unit (4) or an intermediate unit (3), which is arranged between the input unit (2) and the output unit (4), is adapted in a modular manner to the first output shaft (24) and
- the output unit (4) comprises a planetary gear (4.1).

2. Adjustment drive (6) according to Claim 1, **characterized in that** the intermediate unit (3) has at least one sensor (3.1) for position detection.

3. Adjustment drive (6) according to Claim 2, **characterized in that** the intermediate unit (3) also has an additional function (3.1, 3.2).

4. Adjustment drive (6) according to Claim 3, **characterized in that** the additional function (3.1, 3.2) is a slipping clutch, an overload safeguard, a speed-increasing stage and/or a reduction stage.

5. Adjustment drive (6) according to one of the preceding claims, **characterized in that** the component (5) is a tailgate.

6. Adjustment drive (6) according to one of the preceding claims, **characterized in that** an input shaft (12), which drives the input unit (2), the first output shaft (24) of the input unit (2) and a second output shaft (45) of the output unit (4), which is provided for driving the component (5), are arranged coaxially.

7. Adjustment drive (6) according to one of the preceding claims, **characterized in that** the spur gear (2.3) comprises a spur wheel (2.31), which is arranged on the first output shaft (24).

8. Adjustment drive (6) according to one of the preceding claims, **characterized in that** the planetary gear (4.1) comprises a sun wheel (4.11), which can be adapted to the first output shaft (24) of the input unit (2).

9. Adjustment drive (6) according to one of the preceding claims, **characterized in that** the intermediate unit (3) can be adapted to the first output shaft (24) of the input unit (2), and **in that** the sun wheel (4.11) can be adapted to the intermediate unit (3).

## Revendications

1. Entraînement de réglage (6) d'un véhicule, qui est prévu pour l'entraînement d'un composant (5), comprenant
- une unité d'entraînement (2) qui comprend un arbre d'entraînement (12), lequel peut être entraîné au moyen d'un moteur électrique (1), et qui comporte un premier engrenage à vis sans fin, ainsi qu'un premier arbre de sortie (24), et comprenant
- une unité de sortie (4) comprenant un deuxième arbre de sortie (45) pour l'entraînement du composant,
- l'unité d'entraînement comportant un deuxième engrenage à vis sans fin (2.2) ainsi qu'un engrenage à roues droites (2.3) pour l'entraînement du premier arbre de sortie (24), le premier et le deuxième engrenage à vis sans fin (2.1, 2.2) étant connectés l'un derrière l'autre pour former un engrenage à double vis sans fin, et
- soit une unité de sortie (4) soit une unité intermédiaire (3), qui est disposée entre l'unité d'entraînement (2) et l'unité de sortie (4), étant adaptée de manière modulaire au premier arbre de sortie (24), et
- l'unité de sortie (4) comportant un engrenage planétaire (4.1).

2. Entraînement de réglage (6) selon la revendication 1, **caractérisé en ce que** l'unité intermédiaire (3) comprend au moins un capteur (3.1) pour une détection de position.

3. Entraînement de réglage (6) selon la revendication 2, **caractérisé en ce que** l'unité intermédiaire (3) présente en outre une fonction supplémentaire (3.1, 3.2).

4. Entraînement de réglage (6) selon la revendication 3, **caractérisé en ce que** la fonction supplémentaire (3.1, 3.2) est un embrayage à glissement, une protection contre les surcharges, un démultiplicateur et/ou un réducteur.

5. Entraînement de réglage (6) selon l'une quelconque des revendications précédentes, **caractérisé en ce que** le composant (5) est un hayon arrière.

6. Entraînement de réglage (6) selon l'une quelconque des revendications précédentes, **caractérisé en ce qu'**un arbre d'entraînement (12) entraînant l'unité d'entraînement (2), le premier arbre de sortie (24) de l'unité d'entraînement (2), ainsi qu'un deuxième arbre de sortie (45) de l'unité de sortie (4), qui est prévue pour l'entraînement du composant (5), sont disposés de manière coaxiale.

7. Entraînement de réglage (6) selon l'une quelconque des revendications précédentes, **caractérisé en ce que** l'engrenage à roues droites (2.3) comporte une roue droite (2.31), laquelle est disposée sur le premier arbre de sortie (24).

8. Entraînement de réglage (6) selon l'une quelconque des revendications précédentes, **caractérisé en ce que** l'engrenage planétaire (4.1) comporte une roue solaire (4.11), laquelle peut être adaptée au premier arbre de sortie (24) de l'unité d'entraînement (2).

9. Entraînement de réglage (6) selon l'une quelconque des revendications précédentes, **caractérisé en ce que** l'unité intermédiaire (3) peut être adaptée au premier arbre de sortie (24) de l'unité d'entraînement (2), et **en ce que** la roue solaire (4.11) peut être adaptée à l'unité intermédiaire (3).
